# EUROPEAN PATENT APPLICATION

(11) **EP 1 680 957 A1**
(43) Date of publication of application: **19.07.2006**
(21) Application number: 06250252.1
(22) Date of filing: 18.01.2006
(51) Int. Cl.: A01K 39/012

(54) **Bird feeder accessory**

(30) Priority: 18.01.2005 GB 0500941
(71) Applicant: C J Wildbird Foods Limited, Shrewsbury SY4 4UR (GB)
(72) Inventor: Nock, Robert Kenneth, Mellieha (MT)
(74) Representative: Barnfather, Karl Jon

(57) **Abstract**

A bird supplementary food storage apparatus (10) for use with a bird feeder; comprising a food storage vessel (12) and connecting means (14), wherein the connecting means preferably has either; an adjustable member that allows the storage vessel to sealingly engage the main body of bird feeders of various sizes; or a series of members (16,18), each of different size, that allow the storage vessel to sealingly engage the main body of bird feeders of various sizes. A bird feeder having such a supplementary bird food storage vessel.

## Description

### BACKGROUND OF INVENTION

The present invention relates to bird feeding equipment, and in particular to a supplementary bird food storage vessel and to a bird feeder having such a vessel.

Wild bird feeders typically comprise a cylindrical main body in which bird food is stored; the main body having means for dispensing stored feed to birds, often to birds resting on a perch and feeding through an aperture in a side wall of the main body. Users often find that such bird feeders have to be replenished with bird food at very frequent intervals. This can be a inconvenient.

### BRIEF SUMMARY OF INVENTION

An object of the present invention is to provide a supplementary bird food storage vessel, and in particular such a vessel that can be attached to existing bird feeders to mitigate the problem of replenishment. A further object is to provide a bird feeder having a supplementary bird food storage vessel that may be securely attached to an existing bird feeder and that is resistant to attack by squirrels.

According to a first aspect the invention provides a bird supplementary food storage apparatus for use with a bird feeder comprising a food storage vessel and connecting means, wherein the connecting means comprise a series of members, each of different size, that allow the storage vessel to engage the main body of bird feeders of various sizes , such that external egress of bird food at the joint between between said food storage vessel and the main body of the bird feeder is substantially prevented.

The connecting means may comprise a series of interconnected tubes. Preferably, the connecting means comprises a series of concentrically arranged tubes, each successive tube having a reduced cross sectional area. The tubes may have a circular cross section; alternatively, non-circular concentric tubes may be employed. While concentric tubes are preferred the invention may still function using a plurality of non-concentric tubes. The series of tubes may comprise two members.

According to a second aspect the invention provides a bird supplementary food storage apparatus for use with a bird feeder comprising a food storage vessel and connecting means, wherein the connecting means comprise an adjustable member that allows the storage vessel to sealingly engage the main body of bird feeders of various sizes. Thus, external egress of bird food at the joint between said food storage vessel and the main body of the bird feeder substantially prevented. The adjusting member may be a resilient sleeve, a circlip, a jubilee-clip or the like. In the event of a resilient sleeve being used it is preferable to include additional securing means to prevent squirrels and the like from intruding by separating the supplementary food storage vessel from the main body of a bird feeder.

The food storage vessel may be a conically shaped funnel. Alternatively the food storage vessel may be shaped differently; for example, it may be box shaped and have a tapered section formed from a plurality of planar surfaces. It will normally have a tapered section that directs food, flowing downwardly as a result of gravitational forces, towards the connecting means.

A supplementary food storage apparatus according to the invention may form part of a bird feeder.

According to a third aspect the invention provides a bird feeder having a main body for containing and dispensing bird food and further comprising a supplementary bird food storage vessel wherein connecting means enable a lower portion of the storage vessel to be sealed to the top of the main body.

### The invention will be described by reference to the following diagramatic drawings in which:

### BRIEF DESCRIPTION OF DRAWINGS

Figure 1 is a perspective view of a supplementary bird food storage vessel according to the invention;
Figures 2 and 3 show a side views of the storage vessel of Figure 1;
Figure 4 shows a sectioned side view of the storage vessel of Figure 2 along the line A-A';
Figure 5 shows a sectioned side view of the storage vessel of Figure 3 along the line B-B';
Figures 6 and 7 show enlarged portions of Figures 4 and 5 respectively;
Figures 8 and 9 show a plan view and an underside view respectively of the storage vessel of Figure 1;
Figures 10 and 11 show views of the securing and pivot rod respectively;
Figure 12 shows a side view of a first bird feeder according to the invention that has a supplementary bird food storage vessel with a removable lid; and
Figure 13 shows a side view of connecting means for another embodiment of the invention.

### DETAILED DESCRIPTION OF INVENTION

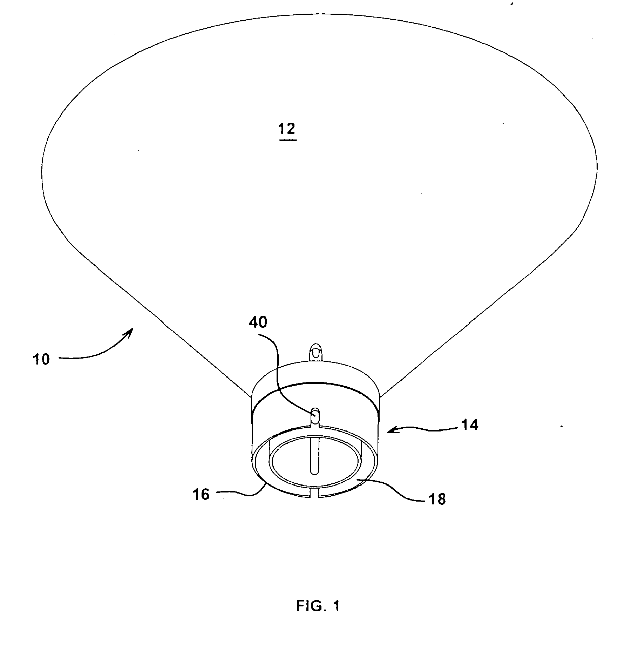

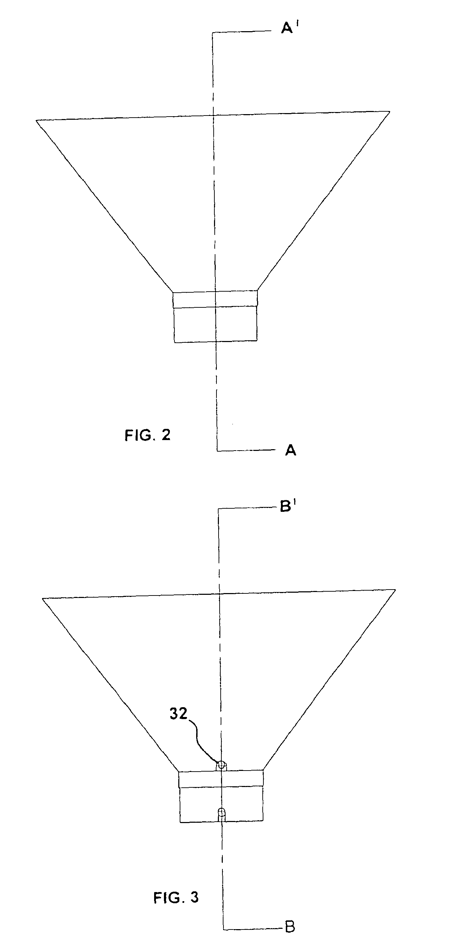

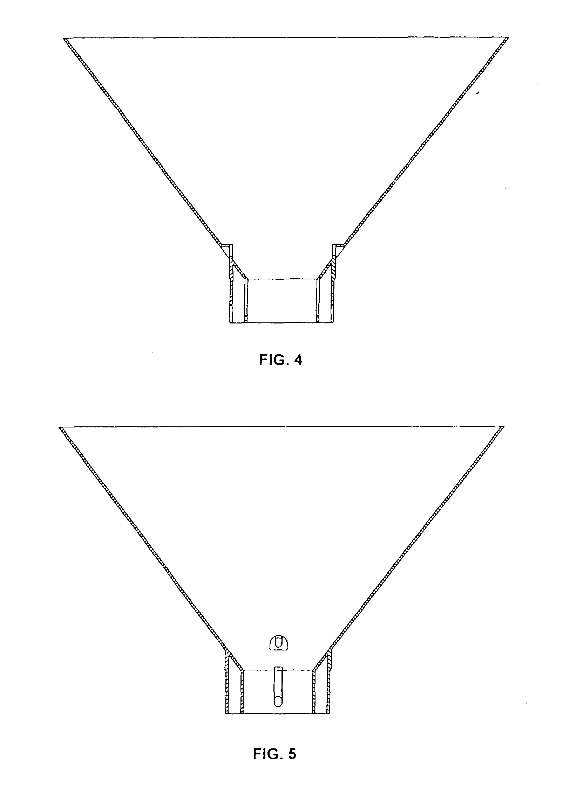

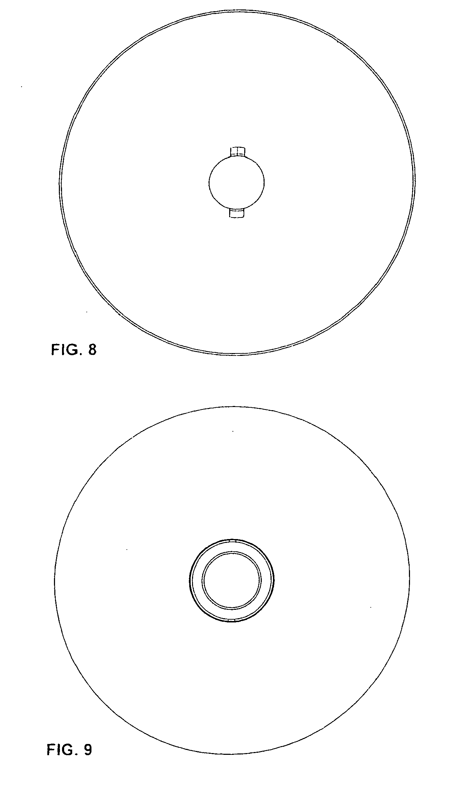

Figures 1 to 12 show various views of one embodiment of a supplementary bird food storage vessel according to one aspect of the invention. The vessel 10 comprises a funnel portion 12 and an engagement portion 14, that is preferably integrally formed. Engagement portion 14 comprises tubular cylindrical sleeves 16,18 arranged concentrically. Sleeve 16 is dimensioned to engage the main tubular body of a first standard bird feeder. Alternatively, smaller sleeve 18 is dimensioned to engage the outside of the main tubular body of a second (smaller) bird feeder. Sleeves 16 and 18 are preferably integrally formed with funnel portion 12.

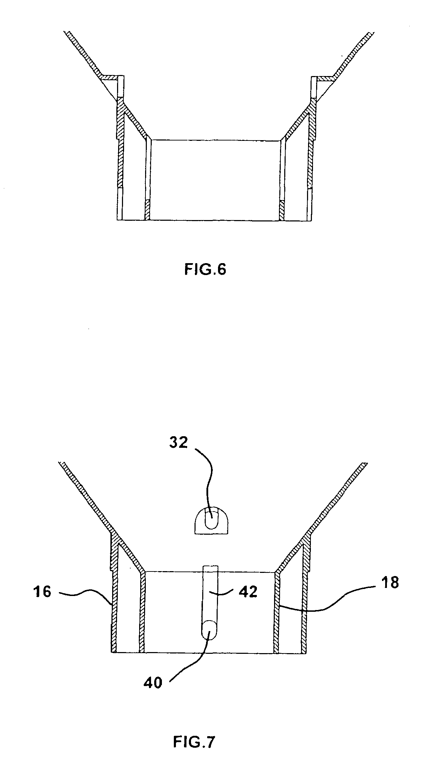

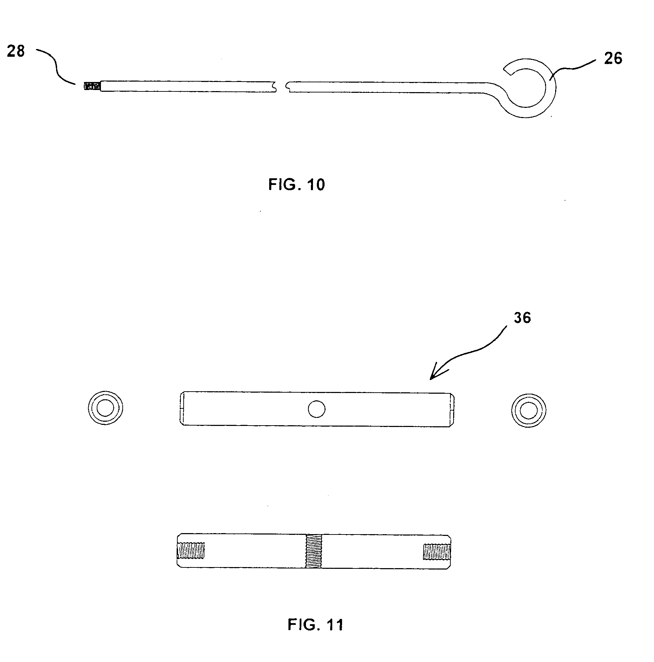

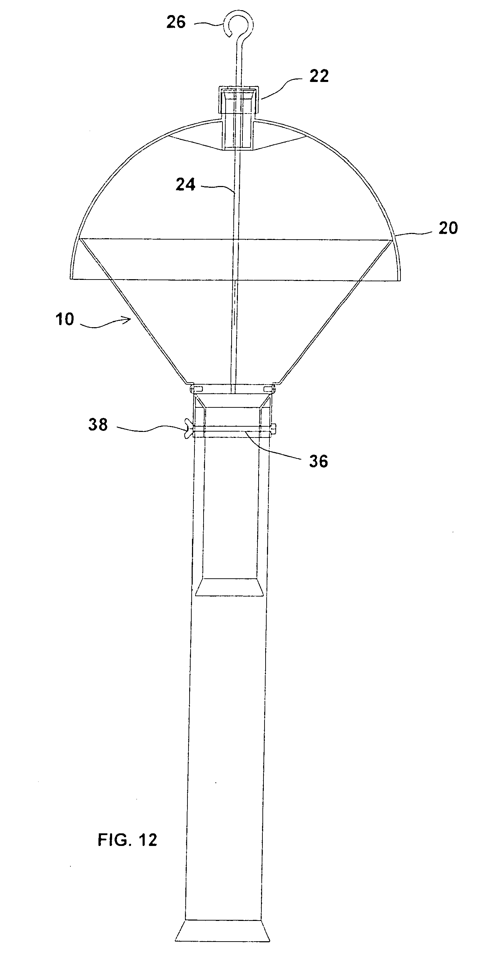

Bird feeders preferably incorporate means to prevent squirrel access to the stored bird food. Thus, the embodiment of Figure 1 will normally be used with a removable lid 20 (see Figure 12). The lid 20 serves to keep stored food dry and also incorporates features that make squirrel access difficult. Lid 20 is hemispherically shaped and has a collet 22 that allows a rod 24 to be firmly gripped. Rod 24 (see Figure 10) comprises a hook section 26 at the upper end and a threaded portion 28 at the lower end. The lower threaded portion 28 screws into a female threaded hole near the centre of a pivot rod 36 (see Figure 11). Pivot rod 36 is pivotably attached at its ends to the walls of vessel 10 at points near the junction of the funnel portion 12 and the sleeve portion 14. Thus, apertures 32 (see Figure 7) moulded in the wall of vessel 10 accept the shank (but not the head) of small threaded bolts (not shown), and these bolts screw into female threaded recesses at each end of pivot rod 36. This arrangement allows the lid 20 to substantially swing clear of the top of the funnel in order to allow replenishment of the vessel 10 (see Figure 12). This is achieved by loosening collet 22 so that the lid 20 can be pulled towards the hooked end of rod 24 and then swung clear by pivoting the lower end of rod 24 about pivot 36.

Further apertures 40 and 42 (see Figure 7) are provided in sleeves 16 and 18 respectively in order to allow a fixing bolt 36 and wing nut 38 (see Figure 12) to pass through. This fixing bolt passes also through holes in the main bird feeder body (normally used to pivotally connect a hanger; the hanger being removed prior to fitting the supplementary bird food storage apparatus). In this way the supplementary bird food storage apparatus may be sealingly secured to the main body of a bird feeder, such that egress of bird food at the joint between said food storage vessel and the main body of the bird feeder substantially prevented.

In use, the lid and hanger is removed from a suitably sized standard tubular birdfeeder and the appropriate sized ring 16, 18 (selected so that it fairly tightly fits around the main tubular body of the birdfeeder) of the apparatus 10 is used so that the apparatus the vessel may sealingly engage the main bird feeder body in such a way that egress of bird food at the joint between said food storage vessel and the main body of the bird feeder substantially prevented. The vessel 10 is then secured by aligning diametrically located holes in the main body of the birdfeeder with apertures 40 and 42 prior to inserting rod 36 through these holes and securing rod 36 in place using wing nut 38. Finally lid 20 (squirrel baffle) is placed on top of vessel 10, collet 22 is loosened and threaded end 28 of rod 24 is screwed into the central thread of rod 36, prior to the lid 20 being locked in place by adjusting it suitably and tightening collet 22.

Figure 12 shows one embodiment of a bird feeder according to the present invention in which the supplementary food storage vessel of Figures 1 to 11 is attached to a standard bird feeders of different diameters.

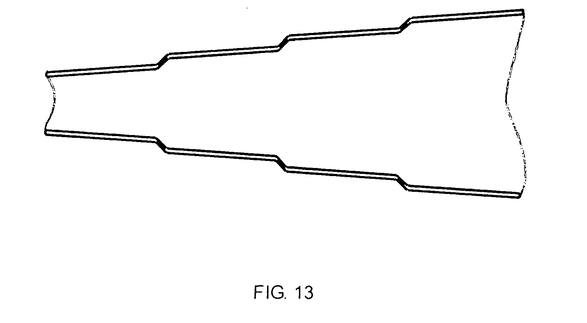

Figure 13 shows connecting means for another embodiment of the invention comprising a series of interconnected tubes of varying diameter; each tube being slightly tapered.

## Claims

1. A supplementary bird food storage apparatus; for use with bird feeders having a main body; said supplementary bird food storage apparatus comprising a food storage vessel and a series of members, each of different size, that allows the storage vessel to engage the main body of bird feeders of various sizes.

2. A supplementary bird food storage apparatus according to Claim 1 wherein said series of members depend from the underside of said food storage vessel.

3. Apparatus according to Claim 2 wherein said series of members depend from the underside of said food storage vessel at an acute angle.

4. Apparatus according to any preceding claim wherein said series of members comprises a series of tubes, each successive tube having a reduced cross sectional area.

5. Apparatus according to any preceding claim wherein said series of members comprises a series of interconnected tubes.

6. Apparatus according to Claim 5 wherein each interconnecting tube is slightly tapered.

7. Apparatus according to any preceding claim wherein at least one of said series of members has a circular cross section.

8. A supplementary bird food storage apparatus; for use with bird feeders having a main body; said supplementary bird food storage apparatus comprising a food storage vessel with an adjustable member that allows the storage vessel to engage the main body of bird feeders of various sizes.

9. Apparatus according to any preceding claim wherein the food storage vessel comprises a tapered section that directs food, flowing downwardly as a result of gravitational forces, towards the series of members.

10. A bird feeder comprising supplementary bird food storage apparatus according to any preceding claim.
